# EUROPEAN PATENT APPLICATION

(11) **EP 4 599 686 A1**
(43) Date of publication of application: **13.08.2025**
(21) Application number: 23874360.3
(22) Date of filing: 04.10.2023
(51) Int. Cl.: A23G 9/00, A23G 9/32, A23G 9/42, A23G 9/48

(54) **HIGH PROTEIN VEGAN ICE CREAM**

(30) Priority: 04.10.2022 ES 202230851
(71) Applicant: KH Alacant Innova, S.L.U., 03690 Sant Vicent del Raspeig (Alicante) (ES)
(72) Inventor: GÓMEZ RODRÍGUEZ, Pablo, 03690 Sant Vicent del Raspeig (Alicante) (ES); FIUK, Joanna Sara, 03690 Sant Vicent del Raspeig (Alicante) (ES); BROTONS BALAGUER, Consuelo, 03690 Sant Vicent del Raspeig (Alicante) (ES); DÍAZ RODRÍGUEZ, Nereida, 03690 Sant Vicent del Raspeig (Alicante) (ES); LÓPEZ OLMO, Elena, 03690 Sant Vicent del Raspeig (Alicante) (ES)
(74) Representative: Ungria López, Javier
(86) International application number: PCT/ES2023/070590
(87) International publication number: WO 2024/074746

(57) **Abstract**

The present invention relates to a high protein vegan ice cream comprising: (a) a vegan ice cream base; and (b) extruded plant protein, wherein the total protein content in the vegan ice cream is at least 6 g per 100 g of ice cream, and wherein the extruded plant protein is coated extruded plant protein, wherein the vegan ice cream meets the requirements to be labelled as a product that is a "source of protein" or has a "high protein content".

## Description

### FIELD OF THE INVENTION

The present invention relates to a vegan ice cream. In particular, the invention relates to a vegan ice cream that meets the requirements to be able to display the labelling identifying it as a product that is a "source of protein" or has a "high protein content".

### BACKGROUND

The vegan movement is a lifestyle and dietary choice that is increasingly accepted in modern society. In relation to food, veganism involves refraining from the use of animal products in one's diet. Foods that do not contain animal products can be referred to as vegan foods. Moreover, consumers are increasingly knowledgeable about nutrition and have been demanding protein-rich product options for several years now to increase their dietary intake, so that they can take advantage of the benefits that protein has for the body. Ice cream with a high protein content is a response to the demand for products of this type.

In ice cream, the main function of protein is to stabilise the fat-air bond, allowing an overrun to be achieved (in other words, a proportion of air that the ice cream naturally acquires during churning) with an adequate incorporation of air. As a general rule, the protein content of ice cream is usually between 1-4 g of protein per 100 g of ice cream, depending on the type of ice cream and its ingredients. As a result of consumer demand for products with a high protein content, ice cream variants with a much higher protein content than typical ice cream have been on the market for some years now. These protein-rich ice creams have a protein content of around 10-20 g per 100 g of ice cream. In this way, the values necessary to be able to label the product as having a "high protein content", in accordance with legal requirements, are achieved. In this sense, the European Food Safety Authority (EFSA) requires that 20% of the product's energy must come from protein (i.e., 20% of the product's total calories come from protein, see Regulation (EC) No. 1924/2006), while according to the United States Food and Drug Administration (FDA), the product must contain at least 20% of the recommended daily intake of protein (e.g., for a recommended daily intake (RDI) of 50 g/day, one serving should have 10 g). From a commercial point of view, it is important that these products can legally claim on their labelling that they are a product with a "high protein content", so that the consumer can identify the ice cream as a higher value-added product.

Similarly, Regulation (EC) No. 1924/2006 also establishes the nutrition claims that are authorised in order to be able to label a product as a "source of protein", wherein the protein must provide at least 12% of the energy value of the food.

Currently, the traditional method of producing high protein ice cream is to incorporate milk protein as an ingredient in the ice cream base. This protein, despite having some effect on the characteristics of the product such as increased viscosity (and in some cases sandiness), is well tolerated at high concentrations. In the context of the preparation of a vegan product, milk protein is replaced by plant protein, which can be of different types (rice, soy, lupin, oat, etc.). However, by substituting plant protein for milk protein in the preparation of a vegan ice cream, the high amount of plant protein excessively alters the texture of the product, creating a thick mass and making it impossible to work. In addition, other problems arise. For example, whereas in a dairy product the dairy flavour of the protein is in line with the product and is acceptable, plant proteins have a certain aftertaste of the plant of origin that is generally rejected by the consumer. Since the flavour comes from the plant protein, this defect is accentuated by increasing the amount of plant protein in the product. There is currently no vegan ice cream on the market that can claim on its labelling that it is a "high protein" ice cream for at least for these two reasons.

Therefore, there is a need to provide consumers with a high protein vegan ice cream option that meets EFSA and/or FDA requirements to be considered a high protein ice cream.

### DESCRIPTION OF THE INVENTION

Given the aforementioned problems resulting from directly adding plant protein as an ingredient in the ice cream base, the present invention proposes to incorporate plant protein in the form of an additive into ice cream, instead of incorporating plant protein as an ingredient into the formula of the ice cream base. For this, the present invention proposes adding extruded plant protein instead of adding plant protein powder to the ice cream base. Extruded plant protein has a texture similar to that of puffed rice. When extruded, plant protein acquires a crunchy texture, similar to that of cereals. In fact, a typical addition to ice cream is extruded cereals, which add playability and a change of texture to the ice cream. Furthermore, the extruded plant protein is coated with chocolate, chocolate substitute or a fat-based coating, so that it is protected from the moisture in the ice cream base and does not soften (in other words, it remains crunchy), so that the plant protein thus added is attractive in the final product (in other words, in the ice cream) and does not cause a sensory problem or problem of taste.

Thus, the invention relates to a high protein vegan ice cream comprising: (a) a vegan ice cream base; and (b) extruded plant protein, wherein the total protein content in the vegan ice cream is at least 6 g per 100 g of ice cream, and wherein the extruded plant protein is coated extruded plant protein.

In this way the extruded product, as it is a plant protein, provides the ice cream with the amount required to meet FDA and/or EFSA requirements for labelling as a high protein product, in other words, as a product that has a "high protein content" or is a "source of protein". In the context of the invention, the term "high protein product" refers interchangeably to a product that may be labelled as a "source of protein" or to a product that may be labelled as having a "high protein content". Furthermore, said plant protein does not interact directly with the components of the ice cream base, where a classic recipe for vegan ice cream having a low protein content can be used as a basis, so that the problems associated with too much plant protein in the ice cream base are eliminated.

With regard to the labelling as "high protein content" or "source of protein", the ice cream must meet FDA and/or EFSA requirements:
- To meet the FDA requirements on labelling as "high protein content", the ice cream must have at least 20% of the recommended daily intake of protein. In particular embodiments, the ice cream has at least 20%, at least 21%, at least 22%, at least 23%, at least 24%, at least 25%, at least 26%, at least 27%, at least 28%, at least 29%, or at least 30% of the recommended daily intake of protein. The recommended daily amount to prevent deficiencies in an average sedentary adult is 0.8 grams per kilogram of body weight. The average weight of men over 18 years of age is 77.5 kilos, while the average weight of women is 63.5 kilos. A person weighing 75 kilograms should consume 60 grams of protein per day. In this context, for a recommended daily amount of 60 grams, the ice cream must have at least 12 grams of protein to provide at least 20% of the recommended daily intake of protein. Similarly, the recommended daily amount of protein for a person weighing 63 kilograms is about 50 grams. In this context, for a recommended daily amount of 50 grams, the ice cream must have at least 10 grams of protein to provide at least 20% of the recommended daily intake of protein. In an embodiment of the invention, the recommended daily amount refers to an adult person weighing 75 kilograms. Alternatively, in an embodiment of the invention, the recommended daily amount refers to an adult person weighing 63 kilograms.
- Similarly, to meet the EFSA requirements on labelling as "high protein content", the ice cream must have at least 20% of calories from protein. In particular embodiments, the ice cream has at least 20% of calories, at least 21%, at least 22%, at least 23%, at least 24%, at least 25%, at least 26%, at least 27%, at least 28%, at least 29%, or at least 30% of calories from protein.
- To meet the EFSA requirements on labelling as a "source of protein", the ice cream must have at least 12% of calories from protein. In particular embodiments, the ice cream has at least 12% of calories, at least 13%, at least 14%, at least 15%, at least 16%, at least 17%, at least 18%, or at least 19% of calories from protein.

In view of the foregoing, the total protein content in the vegan ice cream is at least 6 g per 100 g of ice cream, at least 7 g per 100 g of ice cream, at least 8 g per 100 g of ice cream, at least 9 g per 100 g of ice cream, at least 10 g per 100 g of ice cream, at least 11 g per 100 g of ice cream, at least 12 g per 100 g of ice cream, at least 13 g per 100 g of ice cream, at least 14 g per 100 g of ice cream, at least 15 g per 100 g of ice cream, at least 16 g per 100 g of ice cream, at least 17 g per 100 g of ice cream, at least 18 g per 100 g of ice cream, at least 19 g per 100 g of ice cream, at least 20 g per 100 g of ice cream, at least 21 g per 100 g of ice cream, at least 22 g per 100 g of ice cream, at least 23 g per 100 g of ice cream, at least 24 g per 100 g of ice cream, at least 25 g per 100 g of ice cream, at least 26 g per 100 g of ice cream, at least 27 g per 100 g of ice cream, at least 28 g per 100 g of ice cream, at least 29 g per 100 g of ice cream, at least 30 g per 100 g of ice cream, at least 31 g per 100 g of ice cream, at least 32 g per 100 g of ice cream, at least 33 g per 100 g of ice cream, at least 34 g per 100 g of ice cream, or at least 35 g per 100 g of ice cream, wherein the total protein content in the vegan ice cream refers to the sum of the extruded plant protein content and the protein content in the vegan ice cream base. In particular embodiments of the invention, the total protein content in the vegan ice cream is 6-35 g per 100 g of ice cream. In the embodiments of the invention, the total protein content in the vegan ice cream is 6 g, 7 g, 8 g, 9 g, 10 g, 11 g, 12 g, 13 g, 14 g, 15 g, 16 g, 17 g, 18 g, 19 g, 20 g, 21 g, 22 g, 23 g, 24 g, 25 g, 26 g, 27 g, 28 g, 29 g, 30 g, 31 g, 32 g, 33 g, 34 g, or 35 g per 100 g of ice cream.

In particular embodiments of the invention, the extruded plant protein content in the vegan ice cream is 5-30 g per 100 g of ice cream. Thus, in the embodiments of the invention, the extruded plant protein content in the vegan ice cream is at least 5 g per 100 g of ice cream, at least 6 g per 100 g of ice cream, at least 7 g per 100 g of ice cream, at least 8 g per 100 g of ice cream, at least 9 g per 100 g of ice cream, at least 10 g per 100 g of ice cream, at least 15 g per 100 g of ice cream, at least 20 g per 100 g of ice cream, at least 25 g per 100 g of ice cream, at least 30 g per 100 g of ice cream, at least 35 g per 100 g of ice cream, at least 40 g per 100 g of ice cream. In the embodiments of the invention, the extruded plant protein content in the vegan ice cream is 5 g, 6 g, 7 g, 8 g, 9 g, 10 g, 11 g, 12 g, 13 g, 14 g, 15 g, 16 g, 17 g, 18 g, 19 g, 20 g, 21 g, 22 g, 23 g, 24 g, 25 g, 26 g, 27 g, 28 g, 29 g, or 30 g per 100 g of ice cream. Furthermore, in other particular embodiments of the invention, the protein content in the vegan ice cream base is 1.0-5.9 g per 100 g of ice cream. More particularly, in particular embodiments of the invention, the protein content in the vegan ice cream base is 1.0 g, 1.5 g, 2.0 g, 2.5 g, 3.0 g, 3.5 g, 4.0 g, 4.5 g, 5.0 g, 5.5 g or 5.9 g per 100 g of ice cream.

In the context of the invention, vegan ice cream is understood to be an ice cream that does not contain any ingredients of animal origin. Thus, the vegan ice cream base of the invention may be any ice cream base for which no ingredients of animal origin are used. In a particular embodiment of the present invention, the vegan ice cream base comprises water, plant fat, sugar and/or sweeteners, protein and/or plant-based drink, glucose or glucose-fructose syrup, inulin or other dietary fibres, emulsifiers (mono- and diglycerides), food gums (guar, locust bean), and/or food flavourings.

Any plant protein that can be extruded (e.g., rice, pea, soy, etc.) can be used to make a high protein vegan ice cream. Therefore, in the context of the invention the plant protein is selected from the group consisting of soy protein, rice protein, lupin protein, oat protein, pea protein and combinations thereof. The vegan ice cream of the invention can have plant protein from more than one origin. For example, rice and pea, rice and soy, pea and soy, rice, pea and soy, etc. In particular embodiments of the present invention, the extruded plant protein is selected from the group consisting of soy protein, rice protein, pea protein and/or combinations thereof. In all cases there are plant protein starting products with different percentages of protein (from 90 to 40% by weight). The density of extruded plant protein is usually around 400-500 g/l because, as it is an extruded product, it contains air.

Nevertheless, when preparing a vegan ice cream under this approach, the need arises to protect the extruded plant protein from the moisture in the ice cream base, since when mixing the extruded plant protein *per se* with the vegan ice cream base (e.g., in a fruit feeder), there is the problem that the extruded plant protein would soften after a short time, losing its crunchy texture and turning into an unpleasant wet mass. Additionally, it should be noted that the extruded plant protein *per* se would still have the same plant aftertaste problems in this case. To solve both problems, the proposal of the present invention is to protect the extruded plant protein with a chocolate-like coating or similar that prevents the moisture from penetrating. Furthermore, if this coating has any flavour, it will serve to mask the original taste of the protein. But since the product is vegan, this coating must also be free of ingredients of animal origin. Coatings with these requirements are currently available on the market and are already used in other applications.

Thus, in the context of the invention, the extruded plant protein is coated extruded plant protein. In particular embodiments, the coating of the extruded plant protein is chocolate, chocolate substitute, fat-based coating, candied coating and/or caramelised coating. The fat-based coating may be a coating with coconut fat; coconut fat with cocoa powder and/or flavourings and/or dyes and/or other ingredients intended to give flavour; cocoa butter; cocoa butter with cocoa powder and/or flavourings and/or dyes and/or other ingredients intended to give flavour. Therefore, once the extruded plant protein has been obtained, it is necessary to coat said extruded plant protein with a coating or similar that completely coats it. The amount of coating will depend on the size of the protein to be extruded, where the larger the surface area of the extruded plant protein, the more coating it will have. In principle, a dip coating is used, wherein the hot coating falls from above and covers the food. It is a typical technique used to coat all kinds of products in the form of, for example, balls. It must be ensured that the procedure is carried out in a facility where no ingredients containing milk are handled or where thorough cleaning is carried out to ensure the absence of traces of animal products. This is because if a completely vegan product is to be obtained, the coating process of the extruded proteins must also be free from possible traces of animal products that may occur through cross-contamination. This can happen if the coating lines are used simultaneously in processes wherein chocolate and similar products of dairy origin (e.g., milk chocolate) are also possibly processed. The product of the present invention is a vegan product that is free from traces of any ingredients of animal origin. Thus, in a particular embodiment of the present invention, the ice cream contains casein values <0.5 ppm, beta globulin values <0.17 ppm and/or egg values <1 ppm, so as to ensure that there is no contamination by animal products. Furthermore, in the vegan ice cream of the present invention, no animal allergens are labelled on the labelling as the product is free from traces of animal products.

An advantage of the vegan ice cream of the present invention is that it avoids adding extra protein to the vegan ice cream base, thereby preventing an increase in viscosity in the ice cream base and, therefore, an increased hardness. Furthermore, better performance is achieved when incorporating air (freezing), a basic process in all ice creams, wherein small air bubbles are introduced into the ice cream. The main role of protein is to stabilise the air bubble next to the fat. An imbalance in protein content (either too much or too little) means problems with air incorporation. This has an organoleptic impact, but also a commercial impact. This is because the more air that is incorporated into an ice cream, the lower the cost, as the weight of the product will decrease. For this reason, most commercial ice creams work in the range of 470 g/l to 750 g/l, the latter being considered premium. In embodiments of the invention, the packing density of the vegan ice cream as a "source of protein" or having a "high protein content" is in the range of 450-800 g/l. In particular embodiments, the density is 450 g/l, 475 g/l, 500 g/l, 525 g/l, 550 g/l, 575 g/l, 600 g/l, 625 g/l, 650 g/l, 675 g/l, 700 g/l, 725 g/l, 750 g/l, 775 g/l, or 800 g/l.

In embodiments of the invention, the viscosity of the vegan ice cream base mix is in the range of 400-3000 mPas at 4°C, spindle S04 and 20 RPM (measured on Brookfield equipment). In particular embodiments of the invention, the viscosity of the vegan ice cream base mix is 400, 500, 600, 700, 800, 900, 1000, 1100, 1200, 1300, 1400, 1500, 1500, 1600, 1700, 1800, 1900, 2000, 2100, 2200, 2300, 2400, 2500, 2600, 2700, 2800, 2900 or 3000 mPas at 4°C, spindle S04 and 20 RPM (measured on Brookfield equipment).

A suitable extrusion method in the context of the present invention for the preparation of a vegan ice cream with a high protein content is the dry extrusion technique (Low Moisture Extrusion Cooking, LMEC). Thus, in a particular embodiment of the present invention, the extruded plant protein is protein prepared by dry extrusion (Low Moisture Extrusion Cooking, LMEC). As a result of this dry extrusion technique, the extruded plant protein fragments may have different sizes. For example, extruded plant protein fragments measuring 5x5 mm, 5x3 mm, or 6x3 mm can be used in the context of the invention, although larger fragments can also be used. Furthermore, the thickness of the coating to protect it must be added to these sizes, which can add approximately 1-2 mm more. Therefore, in particular embodiments of the present invention, the extruded plant protein has a maximum dimension of 4 to 10 mm. In particular embodiments of the present invention, the extruded plant protein has a maximum dimension of 4, 5, 6, 7, 8, 9, or 10 mm.

All terms and embodiments described herein are equally applicable to all the aspects of the invention. It should be noted that, as used in the specification and attached claims, the singular forms "a/an" and "the" include their references in the plural, unless the context clearly indicates otherwise. Similarly, the term "comprises" or "comprising" as used herein also describes "consists of" or "consisting of" in accordance with the generally accepted patent practice.

### EXAMPLES

The present invention is described herein by means of the following examples, which are to be interpreted as merely illustrative and not limiting the scope of the invention.

### Example 1: Dosage for ice cream with a "high protein content" according to FDA or EFSA requirements

We take as an example a product comprising extruded pea plant protein with a protein content of 70% and a coating with cocoa butter, cocoa powder, flavourings and natural dyes, which ratio is 20% coating, 80% protein. It is also based on a vegan chocolate ice cream base with 2 g of protein per 100 g of the mix, wherein the vegan chocolate ice cream base comprises: water, coated extruded pea protein (cocoa butter, cocoa powder), coconut oil, sugar, lupin protein, cocoa powder, glucose syrup, inulin, maltodextrin, chocolate, calcium carbonate, salt, locust bean gum, guar gum, flavourings.

In the case of the FDA, the product must contain at least 10 g of protein per serving, in other words, 10 g of protein per 102 g of ice cream. For an ice cream weighing 360 g, the serving would be 102 g (where the serving of 102 g corresponds to 2/3 cup). In order to meet the requirement on labelling (20% of the recommended daily intake, which is calculated for a person weighing 75 kilograms), the ice cream must have at least 14 g of total protein per 102 g of ice cream, wherein the total amount of coated protein is taken into account, as well as the protein provided by the ice cream base.

In the case of the EFSA, the requirement is based on the calories of the product, of which at least 20% must be protein. This means that the higher the calorie content of the product, the more protein it should contain. Given that incorporating the protein with the coating gives us a higher calorie content, the ratio between coating and protein should be closer. If we take the example of a coated extruded protein with a total value of 61.3 g protein/100 g and 453 kcal/100 g and an ice cream base of 180 kcal/100 g and 2.4 g protein/100 g, 15 g/100 g of coated protein would be needed relative to the total grams of ice cream. 60 kcal is provided, as it is greater than the requirement of 20% of the total 220,95 kcal of the product, which is 44.19 kcal. The amount of calories provided by protein is 44.92 kcal. This data would also meet the requirement for the labelling as a "source of protein", which requires that 12% of the calories (in this case 26.51 kcal/100 g) come from protein.

### Example 2: Chocolate ice cream formula with 15% extruded protein

The chocolate ice cream with 15% by weight of coated extruded protein has the following ingredients: water, coated extruded plant protein (15%), coconut oil, sugar, isolated plant protein (mainly lupin), non-fat cocoa powder, glucose syrup, inulin, maltodextrin, chocolate, dextrose, emulsifier: mono- and diglycerides of fatty acids, acidifier: calcium carbonate, salt, stabiliser: locust bean gum, guar gum, flavourings.

## Claims

1. A high protein vegan ice cream comprising:
a) a vegan ice cream base; and
b) extruded plant protein,
wherein the total protein content in the vegan ice cream is at least 6 g per 100 g of ice cream, and
wherein the extruded plant protein is coated extruded plant protein.

2. The ice cream according to claim 1, wherein the coating of the extruded plant protein is chocolate, chocolate substitute, fat-based coating, candied coating and/or caramelised coating.

3. The ice cream according to any one of claims 1 or 2, wherein the total protein content in the vegan ice cream is 6-35 g per 100 g of ice cream.

4. The ice cream according to any one of claims 1 to 3, wherein the extruded plant protein content is 5-30 g per 100 g of ice cream.

5. The ice cream according to any one of claims 1 to 4, wherein the protein content in the vegan ice cream base is 1.0-5.9 g per 100 g of ice cream.

6. The ice cream according to any one of claims 1 to 5, wherein the ice cream has at least 12% of calories from protein.

7. The ice cream according to any one of claims 1 to 6, wherein the ice cream has at least 20% of calories from protein.

8. The ice cream according to any one of claims 1 to 5, wherein the ice cream has at least 20% of the recommended daily intake of protein.

9. The ice cream according to any one of claims 1 to 8, wherein the extruded plant protein is selected from the group consisting of soy protein, rice protein, lupin protein, oat protein, pea protein and combinations thereof.

10. The ice cream according to any one of claims 1 to 9, wherein the extruded plant protein is protein prepared by dry extrusion (Low Moisture Extrusion Cooking, LMEC).

11. The ice cream according to any one of claims 1 to 10, wherein the extruded plant protein has a maximum dimension of 4 to 10 mm.

12. The ice cream according to any one of claims 1 to 11, wherein the ice cream contains casein values <0.5 ppm, beta globulin values <0.17 ppm and/or egg values <1 ppm.
